# EUROPEAN PATENT SPECIFICATION

(11) **EP 3 625 901 B1**
(45) Date of publication and mention of the grant of the patent: **06.10.2021**
(21) Application number: 18725224.2
(22) Date of filing: 17.05.2018
(51) Int. Cl.: H04B 7/185

(54) **COMMUNICATION SYSTEM FOR AIRCRAFTS WITH ALTITUDE BASED FREQUENCY BAND SELECTION**
KOMMUNIKATIONSSYSTEM FÜR FLUGZEUGE MIT FREQUENZBANDAUSWAHL NACH HÖHENLAGE
SYSTÈME DE COMMUNICATION POUR AÉRONEFS AVEC SÉLECTION DE BANDE DE FRÉQUENCES BASÉE SUR L'ALTITUDE

(30) Priority: 17.05.2017 SE 1750612
(43) Date of publication of application: 25.03.2020
(73) Proprietor: Icomera AB, 411 03 Göteborg (SE)
(72) Inventor: KARLSSON, Mats, 660 50 Vålberg (SE); EKLUND, Peter, 417 64 Göteborg (SE)
(74) Representative: AWA Sweden AB
(86) International application number: PCT/EP2018/062868
(87) International publication number: WO 2018/210997

(56) References cited:
- EP-A1- 2 023 685
- EP-A2- 1 376 897
- WO-A1-2015/070140
- US-A1- 2010 042 272
- US-A1- 2014 004 853

## Description

### TECHNICAL FIELD OF THE INVENTION

The present invention relates to the field of wireless communication technology, and more specifically to a wireless communication system and method particularly suitable for aircrafts, such as helicopters and airplanes.

### BACKGROUND

It is not an understatement that the last few decades have introduced vast improvements and advancements in the field of communication technology. In fact, the advent of the internet, cellular phones and more recently smart phones and tablets has greatly changed the way we communicate and quite possibly accelerated the technological field surrounding these devices. As an inevitable consequence, there is an ever increasing demand for bandwidth in order to satisfy the market need for online connectivity which results in an increased focus on constantly developing and improving the underlying technology and systems in order to accommodate this demand.

Further, there is a rapidly increasing demand from consumers to be able to communicate through mobile phones and other handheld terminals at all times, even while traveling on trains, busses, ships and even aircrafts. This is partially embodied in the increasing availability of in-flight entertainment systems and wireless communication (Wi-Fi, GSM, 3G, LTE, 5G) capability onboard aircrafts.

Wireless communication capability onboard aircrafts is not a new concept, even the earliest commercial aircrafts had rather primitive voice communication capability with ground personnel over shortwave radio, which improved flight safety and enabled accelerated commercialization of air transport. Since then, airborne communication systems have been further improved with advent of radar, computers and data links, which serve to improve in-flight safety as well as the overall traveling experience for passengers. < New p. 2a >

However, regardless of recent developments of communication platforms for aircrafts, it has proven to be difficult for presently known systems to provide robust, broadband communication for aircrafts such as helicopters, airplanes and the like.

Thus, in view of the above, there is a need for an improved wireless aircraft communication system which provides better capacity, improved reliability while still being cost effective.

### SUMMARY OF THE INVENTION

It is therefore an object of the present invention to provide a wireless communication system and method for an aircraft, such as a helicopter or an airplane, which alleviates all or at least some of the drawbacks of presently known systems. Another object of the invention is to provide a means for robust and stable wireless connectivity in aircrafts.

This object is achieved by means of a wireless communication system and method for wireless data communication between a wireless communication system in an aircraft and a stationary communication server outside the aircraft, as defined in the appended claims.

According to a first aspect of the present invention, there is provided a wireless communication system for an aircraft. The wireless communication system comprises:
at least one antenna;
a router connected to the at least one antenna, wherein the router is configured to transmit and receive wireless data communication to and from a stationary communication server outside the aircraft through at least one ground base station via the at least one antenna, wherein the router is configured to transmit and receive wireless data communication on a plurality of different frequency bands;
an altitude determining unit configured to determine a current altitude of the aircraft; and
   US 2014/004853 is directed to an air-to-ground communication system, and is particularly directed to the use of native nodes in communication with augmented nodes. It is disclosed that different frequencies may be used for uplink and downlink, and also for the communication with the native and augmented nodes, to avoid interference. It is further discussed that a computer controller may be programmed to respond to a characteristic of the aircraft, such as altitude, and operate a switch to couple a first transceiver to the antenna of the aircraft to provide uplink transmission at a selected air-to-ground frequency when above a pre-selected level, and to couple the second transceiver to the antenna to provide uplink transmission at the native frequency of the ground-based network when below said pre-selected level.
   US 2010/042272 is directed to an ACAR communication system. A proximity sensor determines whether the aircraft is on the ground, or close to the ground. Based on this, a switch can be made between a conventional transmission medium (HF, SATCOM) and an AoIP conversion gateway.
   EP 1376897 discloses a wireless communication system for aircrafts involving both terrestrial and non-terrestrial base stations. In the aircraft, a derivative of a rate of change of received signal levels is calculated, and used to determine when a handover from a terrestrial to a non-terrestrial base station is appropriate, and vice versa.
   EP 2023685 is related to a communication system involving different communication standards, to be used with both terrestrial and non-terrestrial base stations. Predetermined criteria are set up to determine which network to use, and as the conditions changes, a reassignment can be made. The conditions considered could be one or several of a plethora of listed examples, and for example the altitude of the aircraft.
   WO 2015/070140 discloses a wireless communication system where a modulation scheme for a forward link, to the aircraft, is determined based on data sent from the aircraft. The selection can, among many things, be based on geo-spatial location of the aircraft.
wherein the router comprises a control unit operably connected to the altitude determining unit, the control unit being configured to disable wireless data communication (to and from the stationary communication server) on at least one frequency band when the current altitude is determined to be above 5 an altitude threshold value, wherein said plurality of different frequency bands comprises: a first set of frequency bands and a second set of frequency bands, and characterized in that each frequency band in said second set of frequency bands is at a higher frequency than each frequency band in said first set of frequency bands; and that said control unit is configured to disable said wireless data communication on said second set of frequency bands, and thereby restrict said wireless data communication only to said first set of frequency bands, when the current altitude is determined to be above the altitude threshold value.

The inventive aircraft communication system is capable of selecting frequency bands for wireless data communication (between the router and the ground base station(s)) based on a current altitude of the aircraft in order to optimize performance at high and low altitudes.

The present invention is based on the realization that the cellular data link quality decreases at higher altitudes for wireless data communication systems arranged within aircrafts. It was further realized that the data links established at the "higher" frequency bands (e.g. 1800 MHz or 2600 MHz) exhibited connectivity issues. This negatively affected the overall performance of the communication system since telecom systems generally prioritize higher frequency bands, e.g. due to higher capacity in these bands. However, the higher frequency bands are sensitive to the negative/destructive interference caused by the large number of available cells/ground base stations, and also to aircraft movement (pitch, roll, yaw). Thus, the present inventors realized that by disabling communication possibilities at certain frequency bands at high altitudes (e.g. above 500m), and in particular higher frequency bands, and consequently forcing the system to communicate at the remaining, preferably lower, frequency bands (e.g. 600, 700, 800 MHz) at these high altitudes the overall system performance can be increased, in particular since the lower frequency bands generally have larger cells and are more robust. Due to antenna and base station design, lower frequency bands also normally emit more radio signals upwards than higher frequency bands, and are therefore easier to access from high altitudes.

The altitude threshold value may be one or several predefined, static value(s). The same altitude threshold value(s) may be used for each frequency band to be disabled at high altitudes. However, different altitude threshold values may also be used for one and the same frequency band, depending on e.g. the antenna type. Thus, the altitude threshold values may be specific for each antenna or antenna group, and be set in dependence on e.g. antenna gain, antenna directivity and the like. Instead of using static, predefined altitude threshold value(s), the altitude threshold value(s) may be set and adjusted dynamically, in dependence on the context and present conditions. For example, the link and/or signal quality may be monitored when the aircraft is moving upwards, and when the link or signal quality becomes too poor, an altitude threshold value may be set at the altitude when this was detected, thereby disabling one or several frequency bands when the aircraft remains at altitudes above this threshold value.

The "router" is preferably a networking router, which is a machine that forwards data packets between computer networks, preferably on at least two data links in each direction. Stated differently, the networking router is capable of providing data communication between an internal local area network (arranged within the aircraft) and an external wide area network (WAN) outside the aircraft. The router may be a mobile access router (MAR), and preferably a mobile access and applications router (MAAR). The router further comprises means (e.g. a control unit or controller) for controlling which frequency bands are to be used at which altitudes. More specifically, the router preferably comprises means for selecting/defining a set of "higher" frequency bands which are to be disabled once the aircraft exceeds a certain altitude threshold value in order to force or restrict the wireless data communication between the aircraft and the ground base station(s) to one or more of the "lower" frequency bands.

In terms of general operation of the communication system, the router and the stationary (remote) communication server are preferably connected through a plurality of exterior mobile/cellular networks (provided by the ground base stations), which are simultaneously useable. Also, the router is preferably arranged to communicate with the stationary communication server on at least two different data links (communication routes) having different characteristics (e.g. on different frequency bands), and then to automatically separate the data traffic between the data links based on an evaluation of link quality. The evaluation of link quality may for example be executed as disclosed in WO 2015/169917, by the same applicant

. The data streams are then forwarded on one or several links to and from a dedicated external server, which may be referred to as an aggregation server or gateway. The different links thereby form a single virtual link between the router and the gateway.

The communication can be automatically optimized based on the evaluation, and also optionally on other conditions, such as price, speed, latency, etc. Thus, in addition to the evaluation, prioritizing and assignments may be made based on other static or dynamic parameters, such as signal strength and the like. Such further optimizations are per se known from EP 1 175 757 by the same applicant . An automatic selection is then made among the available data links to use the most efficient combination. Hence, a seamless distribution of the data among the different data links is obtained.

For example, the router may be configured to transmit and receive wireless data communication on a first cellular frequency band (e.g. 700 MHz, LTE) and on a second cellular frequency band (e.g. 1900 MHz, LTE). Naturally, the router may be configured to additionally operate on any number of frequency bands therebetween (e.g. 800 MHz, 900 MHz, 1500 MHz, etc.). Accordingly, once the aircraft passes a certain threshold altitude (e.g. 500m), the control unit disables wireless data communication on the 1900 MHz band, consequently restricting communication to the one or more available lower frequency bands.

A set of frequency bands may comprise one or more frequency bands, but preferably at least two or more, such as three of four different frequency bands. In an illustrative example of the embodiment, the first set of frequency bands may for example include 600 MHz, 700 MHz, 800 MHz and 900 MHz, while the second set of frequency bands may include 1800 MHz and 2600 MHz. Accordingly, when the aircraft is flying at an altitude between ground level and the altitude threshold value (which may be any value between e.g. 200 and 5000 m above the ground level, and preferably between 500 and 3000 m, and most preferably between 500 and 1500 m), the control unit is preferably configured to make all frequency bands available. However, the router may be configured such that it prioritizes selection of the second set of frequency bands when the current altitude of the aircraft is determined to be below the altitude threshold value. This is because connectivity and data rates are generally better on the higher frequency bands on low altitudes. Moving on, once the aircraft passes the altitude threshold value (e.g. 750 m) the control unit disables wireless data communication on the second set of frequency bands, thereby limiting communication only on the first set of frequency bands. The first and second set of frequency bands may be formed such that the first set of frequency bands only comprises frequency bands below 1 GHz (1000 MHz) and the second set of frequency bands only comprises frequency bands above 1 GHz (1000 MHz). A set is in the present context to be understood as a group comprising one or more members/elements. Moreover, the plurality of frequency bands may comprise more than two sets of frequency bands, each set having a different altitude threshold value, above which, the specific set of frequency bands is disabled. Preferably, this disabling disables frequency bands at the highest frequencies first, and then stepwise disables the highest of the remaining frequency bands.

Furthermore, in accordance with another embodiment of the present invention the wireless communication system further comprises a plurality of antennas, and wherein the router further comprises a plurality of modems for communication with said external stationary communication server, each modem being associated with and connected to at least one antenna;
wherein each modem is further associated with a specific frequency band selected from the plurality of frequency bands; and
wherein said control unit configured to disable wireless communication on at least one frequency band when the current altitude is determined to be above a threshold value, by disabling at least one modem. Thus, one may arrange a first set of modems to be associated with the lowest frequency band(s) and a second set of modems to be associated with the highest frequency band(s), and disable the entire second set of modems when the control unit is notified by the altitude determining unit that the aircraft has reached or surpassed the altitude threshold value. For example, the router may be provided with at least 8 modems, preferably at least 10 modems, such as e.g. 15 modems.

Even further, in accordance with yet another embodiment of the present invention, the router comprises a subscriber identity module (SIM) pool including a plurality of SIMs, and wherein said control unit is capable of periodically assigning SIMs within said SIM pool to any one of said modems. Subscriber Identity Modules (SIMs) are per se known, and used to identify and authenticate a user to a wireless network so that the network can authorize the user to set-up data transmissions and calls. A SIM includes a processor and memory, and some types of SIMs are in the form of SIM cards, which can be removed from the SIM holder. A Universal Subscriber Identity Module (USIM) is a next-generation SIM. Hereinafter, both SIMs and USIMs will be collectively referred to as SIMs.

Moreover, by using a common pool of SIMs, accessible for a plurality of modems, the total number of SIMs may be reduced, and the SIMs available may be used more efficiently. At the same time, the accessibility for each modem to an adequate SIM at each time increases, since the number of accessible SIMs for each modem increases. Accordingly, the use of the available SIMs can hereby be managed more efficiently. In particular, it hereby becomes possible to provide access for each modem to one or several suitable SIM(s) in two or more different countries, and in particular in every country in which the aircraft may travel.

Further, in accordance with yet another embodiment of the present invention, the altitude determining unit is configured to continuously monitor and determine the altitude of the aircraft. The altitude determining unit may be integrated within the control unit or a stand-alone component external to the router and associated with an altimeter/altitude meter which is configured to determine an altitude of the aircraft based on e.g. a measurement of atmospheric pressure. The control unit of the router may accordingly be coupled to the external altimeter (i.e. the altimeter of the aircraft).

However, the altitude determining unit may in some embodiments of the present invention be provided within the router, and may furthermore for example be a Global Navigation Satellite System GNSS unit, such as e.g. a GPS-unit, GLONASS-unit, Galileo-unit, etc. depending on the preferred regional system. By providing the altitude determining unit within the router, the wireless communication system becomes a stand-alone system which is easy to install and therefore can be retrofitted into existing aircrafts without requiring any coupling to the aircraft's integrated altimeter. The antennas are preferably arranged external to the router.

Even further, in yet another example embodiment of the present invention, the aforementioned altitude threshold value is a first altitude threshold value, and wherein the control unit is further configured to disable wireless data communication on at least one other frequency band when the current altitude is determined to be above a second altitude threshold value, higher than said first altitude threshold value, such that wireless data communication on at least two frequency bands is disabled when the current altitude is determined to be above the second threshold value. Thus, the control unit is preferably configured to receive and store two or more altitude threshold values, such as three or four altitude threshold values. For example, the control unit may be configured to disable wireless data communication on frequency bands higher than 2.0 GHz when above 500 m (first altitude threshold value), on frequency bands higher than 1.5 GHz when above 1000 m (second altitude threshold value), and on frequency bands higher than 1.0 GHz when above 1500 m (third altitude threshold value). By applying a plurality of threshold values and thereby disabling frequency bands in a sequential manner based on the determined current attitude the wireless data communication system is provided with an optimization scheme which aids in ensuring a robust and speedy connection for the duration of the flight, since one can apply thresholds such that high frequency bands (with high data rates) can be utilized until the communication link quality (on those frequency bands) passes a minimum quality threshold.

As already discussed, one, several or all of the altitude threshold value(s) may also be dynamically adjustable, and may e.g. be adjusted or set in dependence of signal and/or link quality on one or several of the frequency bands.

According to another aspect of the invention, there is provided a method for wireless data communication between a wireless communication system in an aircraft and a stationary communication server outside the aircraft, the method comprising:
providing a router within the aircraft, the router being connected to at least one antenna and configured to transmit and receive wireless data communication to and from the stationary communication server outside the aircraft through at least one ground base station via the at least one antenna, wherein the router is configured to transmit and receive wireless data communication on a plurality of different frequency bands;
determining a current altitude of the aircraft; and
disabling wireless data communication on at least one frequency band out of the plurality of different frequency bands when the current altitude is 30 determined to be above an altitude threshold value; forming a first subset of frequency bands out of the plurality of different frequency bands; forming a second subset of frequency bands out of the plurality of different frequency bands, characterized in that each frequency band in the second subset of frequency bands is of a higher frequency than each frequency band in the first subset of frequency bands; and wherein the step of disabling wireless data communication comprises disabling wireless data communication on the second subset of frequency bands when the current altitude is determined to be above the altitude threshold value.

With this aspect of the invention, similar advantages and preferred features are present as in the previously discussed first aspect of the invention.

These and other features and advantages of the present invention will in the following be further clarified with reference to the embodiments described hereinafter.

### BRIEF DESCRIPTION OF THE DRAWINGS

For exemplifying purposes, the invention will be described in closer detail in the following with reference to embodiments thereof illustrated in the attached drawings, wherein:
Fig. 1A is a schematic illustration of an aircraft having a wireless communication system in accordance with an embodiment of the present invention;
Fig. 1B is a schematic illustration of the aircraft from Fig. 1A after is has ascended past an altitude threshold;
Fig. 2A is a schematic illustration of an aircraft having a wireless communication system in accordance with another embodiment of the present invention;
Fig. 2B is a schematic illustration of the aircraft from Fig. 2A after is has ascended past an altitude threshold;
Fig. 3 is a schematic illustration of an aircraft having a wireless communication system in accordance with yet another embodiment of the present invention;
Fig. 4 is a schematic flow chart representation of a method for wireless data communication in accordance with an embodiment of the present invention;

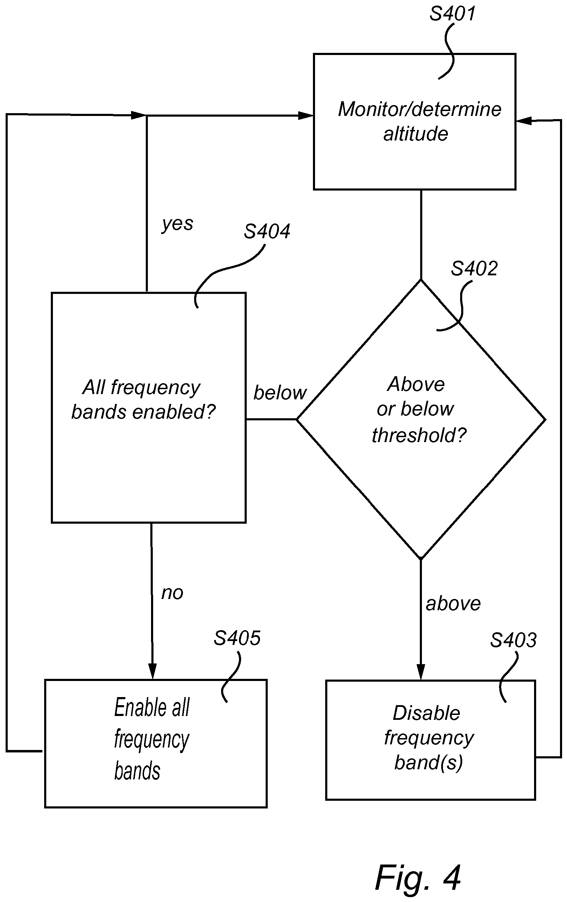

Fig. 4 is a schematic flow chart representation of a method for wireless data communication in accordance with another embodiment of the present invention;

### DETAILED DESCRIPTION

In the following detailed description, preferred embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention. In the detailed embodiments described in the following are related to helicopters. However, it is to be acknowledged by the skilled reader that the method and system are correspondingly useable on other aircrafts, such as airplanes and the like.

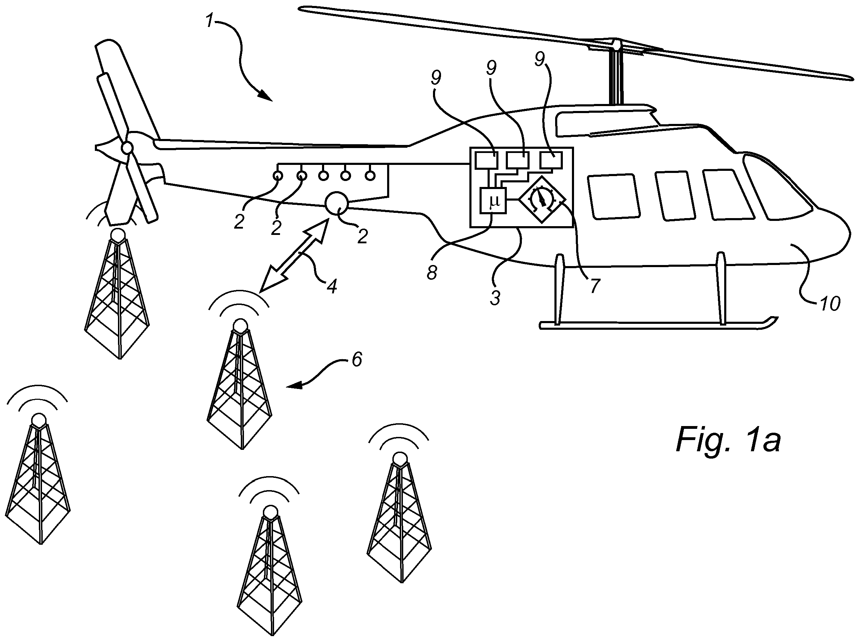

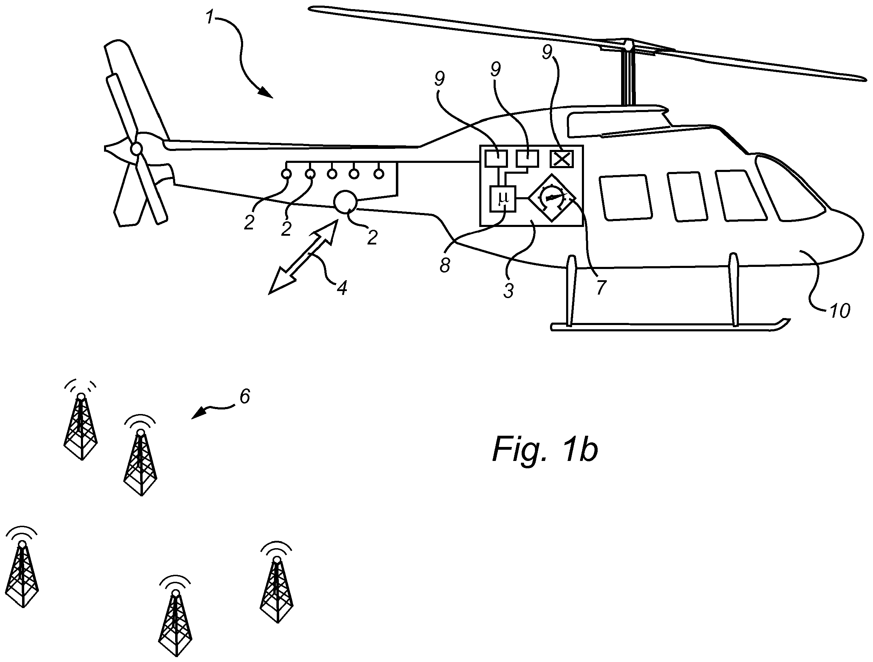

In Figs. 1a and 1b, schematic illustrations of an aircraft 10, here in the form of a helicopter, having a wireless communication system 1 are presented. The two figures (1a and 1b) are intended to show the same aircraft at two different altitudes, below an altitude threshold in Fig. 1a and above the altitude threshold in Fig. 1b. The wireless communication system 1 comprises a plurality of antennas 2 connected to a data communication router 3 configured to transmit and receive wireless data communication to and from at least one ground base station 6 via the plurality of antennas (as indicated by the double headed arrow 4). Moreover, the router 3 is configured to transmit and receive wireless data communication on a plurality of different frequency bands. The router 3 comprises a plurality of modems 9, each having at least one antenna 2 assigned to each modem 9. However, if e.g. MIMO (multiple input multiple output) is used, more than one antenna 2 may also be assigned to each modem. Even though only 3 modems are illustrated in Figs. 1a ― 1b, the skilled reader readily realizes that the router may comprise a higher number of modems 9, such as e.g. at least 8 modems or at least 15 modems. The antennas 2 may be omnidirectional antennas and/or directional/beam antennas depending on the intended application and desired specifications, preferably the system 1 comprises a combination of omnidirectional and directional antennas.

The system 1 further comprises an altitude determining unit 7 configured to determine a current altitude of the aircraft 10. The altitude determining unit 7 is preferably configured to continuously monitor and determine the altitude of the aircraft, and may for example be a Global Navigation Satellite System, GNSS, provided within the router 3, such as e.g. GPS, GLONASS, Galileo system, BeiDou system, etc. By providing a GNSS internally within the router 3, installation of the wireless communication system 1 is facilitated as there is no need for establishing an operational connection between the aircraft's 10 internal altimeter (not shown) and the router. Moreover, the inventive system 1 may thereby easily be retrofitted into existing aircrafts 10.

Further, the router comprises a control unit 8, e.g. a microprocessor, which is connected to the altitude determining unit 7 and to each of the modems 9. The control unit is preferably realized as a software controlled processor. However, the control unit 8 may alternatively be realized wholly or partly in hardware. The control unit 8 is configured to disable wireless data communication on at least one frequency band when the current altitude of the aircraft 10 is determined to be above an altitude threshold value. The disabling of wireless data communication on a frequency band may for example be executed by disabling/turning off a modem 9, as indicated in the illustration of Fig. 1b, which serves to show how the control unit 8 disables a frequency band when the aircraft 10 rises from a first, lower, altitude (Fig. 1a) to a second, higher, altitude (Fig. 1b). This is additionally indicated by the meter representing the altitude determining unit 7 and by the reduced size of the ground base stations 6. The second altitude is to be understood as an altitude higher than the altitude threshold value.

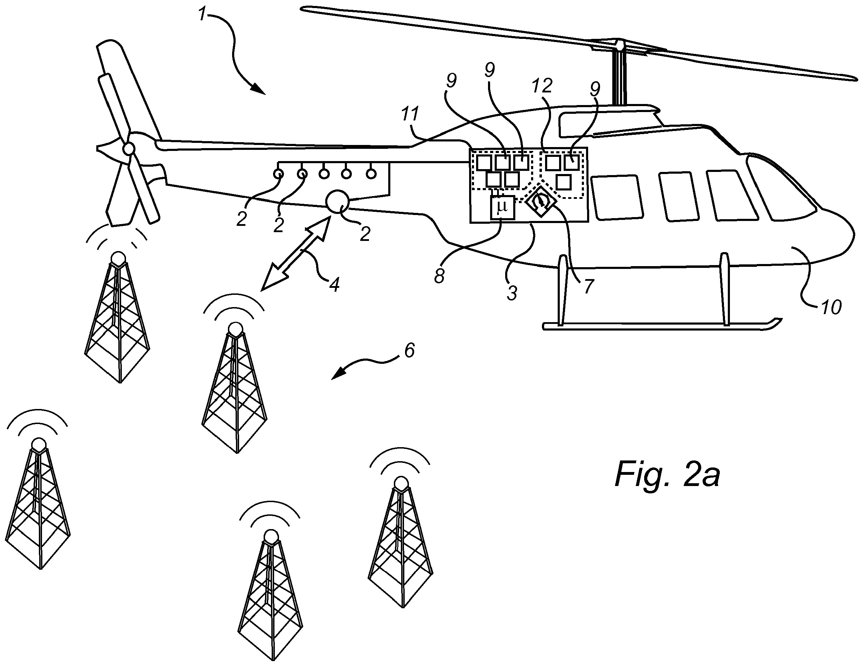

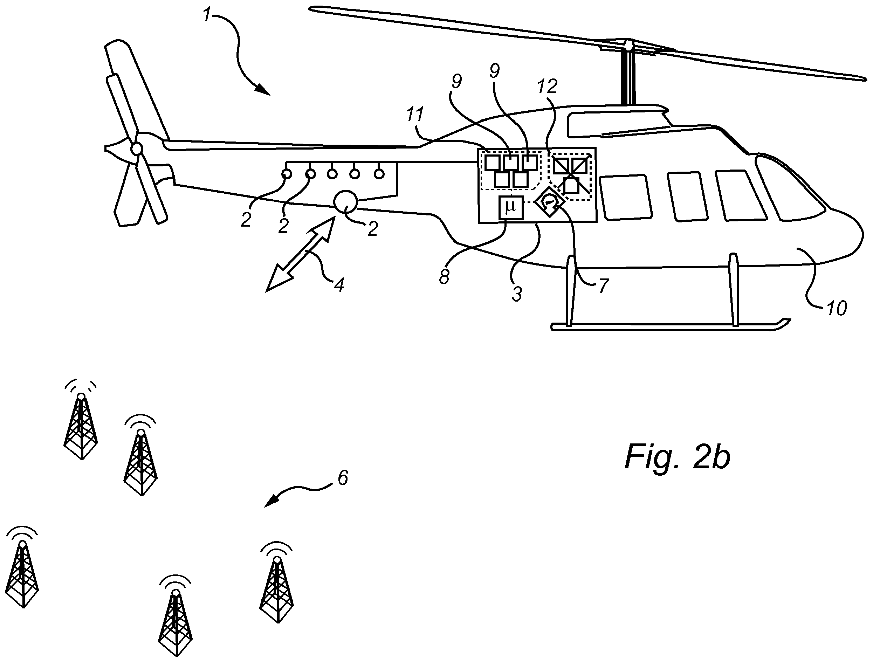

Figs. 2a - 2b schematically illustrate another embodiment of the inventive wireless communication system 1, in a similar fashion as in Figs. 1a ― 1b, i.e. Fig. 2a shows an aircraft 10 at first altitude below an altitude threshold value, and Fig. 2b shows the aircraft 10 at a second altitude, above the altitude threshold value. However, in this embodiment, the plurality of functional frequency bands (each being associated with at least one modem 9) comprises a first set of frequency bands 11 and a second set of frequency bands 12. The first set of frequency bands 11 may for example include 600, 700, 800 and 900 MHz, and the second set of frequency bands may for example include 1800, 1900 and 2600 MHz. Further, the router may include more modems 9 than useable frequency bands, e.g. the router may comprise separate modems for different operators, but operating at the same frequency bands.

Accordingly, when the aircraft 10 rises, the control unit 8 is configured to disable wireless data communication on the second set of frequency bands 12, and thereby restrict the wireless data communication only to the first set of frequency bands 11, when the current altitude is determined to be above a threshold value (Fig. 2b illustration). Remaining components and functions illustrated in Figs. 2a-2b and which have the same reference numerals as in Figs. 1a-1b are considered to already be discussed in detail, wherefore any detailed description of these will for the sake of brevity be omitted.

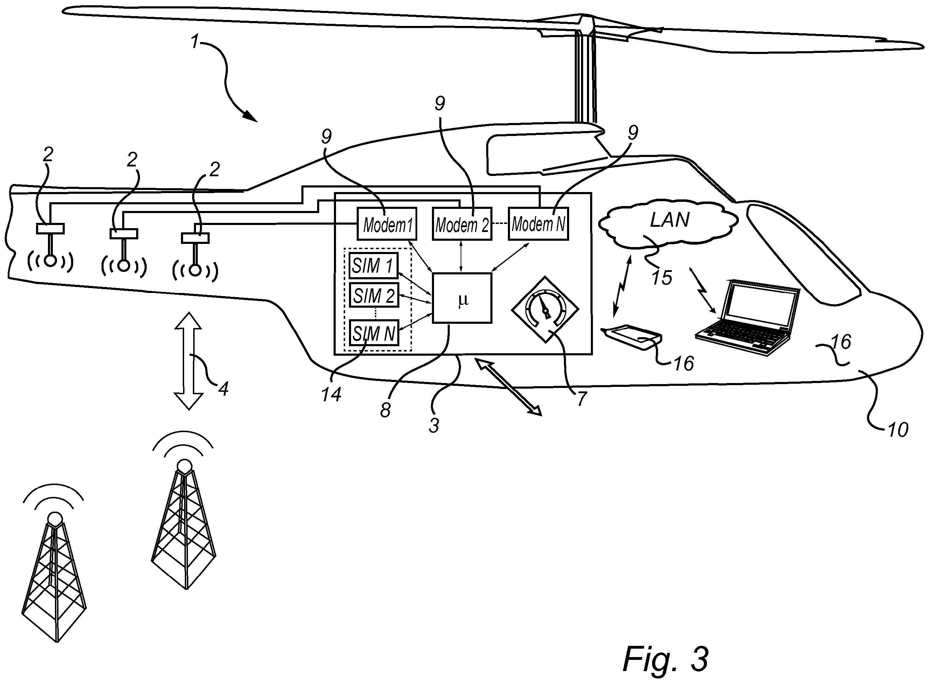

Fig. 3 schematically illustrates yet another embodiment of the inventive wireless communication system 1. Here, the router 3 comprises a subscriber identity module pool (SIM pool) 13 which includes a plurality of SIMs 14, and the control unit 8 is accordingly configured to periodically assign SIMs 14 within the SIM pool 13 to any one of the plurality of modems 9 provided within the router 3. In other words, the SIMs 14 form a common SIM pool 13, accessible for all the modems 9. The SIMs 14 are preferably SIM cards, and the SIM pool 13 is realized as a SIM card holder, comprising a plurality of slots for receiving a plurality of SIM cards 14.

The assignment of SIMs to modems at every specific time is preferably determined based on a set of rules in the controller. The set of rules may e.g. be used to assign SIMs to the modems based on information such as in, the current altitude of the aircraft 10, which country the aircraft is currently travelling, the amount of data that has been conveyed by use of the different SIMs, the current price related to conveying data through the different SIMs, the type of data being conveyed, etc.

Furthermore, Fig. 3 illustrates how the router 3 is configured for receiving and transmitting data between an internal local area network (LAN) 15 and a plurality of external wide ware networks (WANs) 6. The LAN 15 is preferably a wireless network, using one or several internal antennas to communicate with clients 16 within the aircraft 10. To this end, it is e.g. feasible to use a distributed antenna, such as a leaky feeder extending through the vehicle, but other types of antennas may also be used. The wireless network may be realized as a wireless local area network (WLAN), and may e.g. operate based on the IEEE 802.11 standard, ("Wi-Fi"), and wherein one or more access point(s) is provided in the aircraft. However, it is also possible to use a wired network within the vehicle. The skilled reader realizes that the LAN-setup is equally applicable in the embodiments discussed in reference to the foregoing figures, and that it was merely omitted in order to avoid clogging in the illustrations.

Fig. 4 is a schematic flow chart representation of a method for wireless data communication between a wireless communication system in an aircraft and a stationary communication server outside the aircraft, in accordance with an embodiment of the invention.

Firstly, a router is provided within the aircraft. The router may be any router according to any of the above discussed embodiments of the inventive wireless communication system. The router is connected to at least one antenna and configured to transmit and receive wireless data communication to and from the stationary communication server outside the aircraft through at least one ground base station via the at least one antenna. Moreover, the router is specifically configured to transmit and receive wireless data communication on a plurality of different frequency bands.

Next, an altitude of the aircraft is monitored/determined, S401. Once the altitude is determined by an altitude determining unit or any control unit of the router, a check is performed, S402, to see whether the determined altitude of the aircraft is above or below an altitude threshold value. If it is determined that the altitude of the aircraft is above the altitude threshold value, wireless data communication is disabled, S403, on at least one frequency band of the plurality of different frequency bands. Preferably, the highest frequency band(s) is/are disabled (e.g. all frequency bands above 1 GHz) once the aircraft goes above the altitude threshold value.

However, if it would have been determined that the altitude of the aircraft was below the altitude threshold value, a check is performed, S404, to see if all frequency bands are enabled. If all frequency bands are determined to be enabled, one goes back to monitoring/determining, S401, the altitude of the aircraft, if one or more frequency bands are determined to be disabled, one preferably enables all frequency bands, S405, and then returns back to monitoring/determining, S401, the altitude of the aircraft.

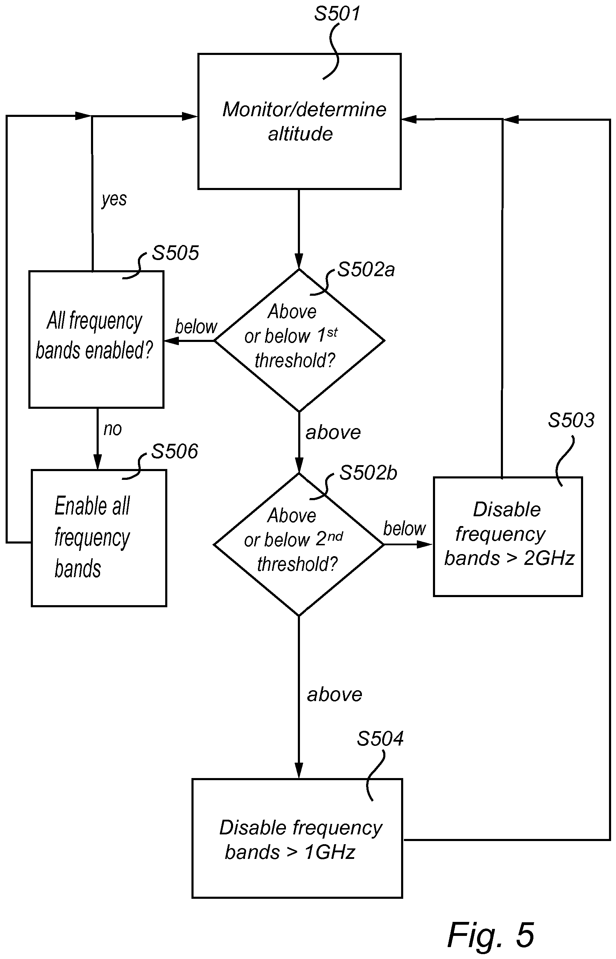

In Fig. 5 another flow chart representation of a method for wireless data communication in accordance with another embodiment of the present invention is illustrated. In this particular embodiment, there are two different altitude threshold values provided in order to make the method more dynamic and agile. More specifically, the method illustrated in Fig. 5 enables for better utilization of the higher frequency bands since it is based on an optimization scheme. Similar to the method described in reference to Fig. 4, a router according to any of the previously discussed embodiments of the invention is provided, and the altitude of the aircraft is monitored/determined (e.g. by an altitude determining unit).

Further, a check is performed, S502a, to see if the altitude of the aircraft is above or below a first altitude threshold value (e.g. above 500 m). If it is determined that the aircraft is above the first altitude threshold value, the method proceeds with checking, S502b, if the altitude of the aircraft is above or below a second altitude threshold value (e.g. above 1000 m). If the aircraft's altitude is determined to be below the second altitude threshold value (but above the first altitude threshold value) all frequency bands above 2 GHz are disabled, S503. However, if it would have been determined that the aircraft's altitude was above the second altitude threshold value as well, then wireless data communication on all frequency bands above 1 GHz are disabled. After each decision to disable one or more frequency bands, one preferably returns to monitoring/determining, S501, the altitude of the aircraft. The method may further comprise three, four or even more altitude thresholds in order to further control the allowable frequency bands for specific altitude ranges.

However, stepping back a few steps, if it would have been determined that the altitude of the aircraft was below the first threshold value, the method preferably comprises a step of checking, S505, if all frequency bands are enabled, similar to the method discussed in reference to Fig. 4. Thus, if all frequency bands are enabled, go back to monitoring/determining, S501, the current altitude of the aircraft, if not, proceed with enabling all frequency bands, S506, and then go back to monitoring/determining, S501, the current altitude of the aircraft.

The invention has now been described with reference to specific embodiments. However, several variations of the communication system are feasible. For example, the control unit may restrict communication to certain frequency bands at certain altitude ranges, the number of modems and SIMs may vary, and so on. Further, a plurality of altitude thresholds may be utilized, as already exemplified. The scope of the invention is defined by the appended claims.

## Claims

1. A wireless communication system (1) for an aircraft (10), said wireless communication system comprising:
at least one antenna (2);
a router (3) connected to said at least one antenna (2), wherein the router is configured to transmit and receive wireless data communication to and from a stationary communication server outside said aircraft through at least one ground base station (6) via said at least one antenna (2), wherein the router (3) is configured to transmit and receive wireless data communication on a plurality of different frequency bands;
an altitude determining unit (7) configured to determine a current altitude of said aircraft; and
wherein said router (3) comprises a control unit (8) operably connected to said altitude determining unit (7), said control unit (8) being configured to disable wireless data communication on at least one frequency band when the current altitude is determined to be above an altitude threshold value,
wherein said plurality of different frequency bands comprises:
a first set of frequency bands (11) and a second set of frequency bands (12), **characterized in that**
each frequency band in said second set of frequency bands is at a higher frequency than each frequency band in said first set of frequency bands (11); and
that said control unit (8) is configured to disable said wireless data communication on said second set of frequency bands (12), and thereby restrict said wireless data communication only to said first set of frequency bands (11), when the current altitude is determined to be above the altitude threshold value.

2. The wireless communication system according to claim 1, wherein said control unit (8) is further configured to prioritize a selection of said second set of frequency bands (12) when the current altitude is determined to be below said altitude threshold value.

3. The wireless communication system according to any one of the preceding claims, wherein said first set of frequency bands (11) comprises frequency bands below 1 GHz and wherein said second set of frequency bands (12) comprises frequency bands above 1 GHz.

4. The wireless communication system according any one of the preceding claims, wherein said altitude threshold value is within the range of 200 - 5000 meters, and preferably 500 - 3000 m, and most preferably 500 - 1500 m.

5. The wireless communication system according to any one of the preceding claims, further comprising a plurality of antennas (2), and wherein the router (3) further comprises a plurality of modems (9) for communication with said external stationary communication server, each modem (9) being associated with and connected to at least one antenna (2);
wherein each modem (9) is further associated with a specific frequency band selected from the plurality of frequency bands; and
wherein said control unit (8) is configured to disable wireless communication on said at least one frequency band when the current altitude is determined to be above said threshold value, by disabling at least one modem (9).

6. The wireless communication system according to any one of the preceding claims, wherein the router (3) comprises at least eight modems (9), and preferably at least ten modems (9).

7. The wireless communication system according to any one of the preceding claims, wherein said altitude determining unit (7) is configured to continuously monitor and determine the altitude of said aircraft (10).

8. The wireless communication system according to any one of the preceding claims wherein said altitude determining unit (7) is provided within the router (3).

9. The wireless communication system according to any one of the preceding claims, wherein said altitude determining unit (7) is a Global Navigation Satellite System, GNSS, unit.

10. The wireless communication system according to any one of the preceding claims, wherein said altitude threshold value is a first altitude threshold value; and
wherein said control unit (8) is further configured to disable wireless data communication on at least one other frequency band when the current altitude is determined to be above a second altitude threshold value, higher than said first altitude threshold value, such that wireless data communication on at least two frequency bands is disabled when the current altitude is determined to be above the second threshold value.

11. The wireless communication system according to any one of the preceding claims, wherein at least one of the altitude threshold value(s) is dynamically adjustable, and preferably adjustable in dependence on signal and/or link quality.

12. A method for wireless data communication between a wireless communication system (1) in an aircraft (10) and a stationary communication server outside the aircraft, said method comprising:
providing a router (3) within the aircraft (10), the router (3) being connected to at least one antenna (2) and configured to transmit and receive wireless data communication to and from the stationary communication server outside the aircraft (10) through at least one ground base station (6) via said at least one antenna (2), wherein the router is configured to transmit and receive wireless data communication on a plurality of different frequency bands;
determining a current altitude of the aircraft (10); and
disabling wireless data communication on at least one frequency band out of said plurality of different frequency bands when the current altitude is determined to be above an altitude threshold value;
forming a first subset of frequency bands (11) out of the plurality of different frequency bands;
forming a second subset of frequency bands (12) out of the plurality of different frequency bands, **characterized in that** each frequency band in the second subset of frequency bands (12) is of a higher frequency than each frequency band in the first subset of frequency bands (11); and
wherein the step of disabling wireless data communication comprises disabling wireless data communication on the second subset of frequency bands (12) when the current altitude is determined to be above the altitude threshold value.

## Patentansprüche

1. Drahtloses Kommunikationssystem (1) für ein Flugzeug (10), wobei das drahtlose Kommunikationssystem umfasst:
wenigstens eine Antenne (2);
einen Router (3), der an die wenigstens eine Antenne (2) angeschlossen ist, wobei der Router ausgestaltet ist, um eine drahtlose Datenkommunikation auf einen und von einem stationären Kommunikationsserver außerhalb des Flugzeugs durch wenigstens eine Boden-Basisstation (6) über die wenigstens eine Antenne (2) zu übertragen und zu empfangen, wobei der Router (3) ausgestaltet ist, um eine drahtlose Datenkommunikation auf mehreren unterschiedlichen Frequenzbändern zu übertragen und zu empfangen;
eine Höhenbestimmungs-Einheit (7), die ausgestaltet ist, um eine aktuelle Höhe des Flugzeugs zu bestimmen; und
wobei der Router (3) eine Steuereinheit (8) umfasst, die betriebsbereit an die Höhenbestimmungs-Einheit (7) angeschlossen ist, wobei die Steuereinheit (8) ausgestaltet ist, um die drahtlose Datenkommunikation auf wenigstens einem Frequenzband zu deaktivieren, wenn bestimmt ist, dass die aktuelle Höhe oberhalb eines Höhengrenzwerts liegt,
wobei die mehreren unterschiedlichen Frequenzbänder umfassen:
einen ersten Frequenzbandsatz (11) und einen zweiten Frequenzbandsatz (12), **dadurch gekennzeichnet, dass** jedes Frequenzband in dem zweiten Frequenzbandsatz eine höhere Frequenz aufweist als jeder Frequenzbandsatz in dem ersten Frequenzbandsatz (1); und
dass die Steuereinheit (8) ausgestaltet ist, um die drahtlose Datenkommunikation auf dem zweiten Frequenzbandsatz (12) zu deaktivieren und dadurch die drahtlose Datenkommunikation nur auf den ersten Frequenzbandsatz (11) zu beschränken, wenn bestimmt ist, dass die aktuelle Höhe oberhalb des Höhengrenzwerts liegt.

2. Drahtloses Kommunikationssystem nach Anspruch 1, wobei die Steuereinheit (8) weiterhin ausgestaltet ist, um eine Auswahl des zweiten Frequenzbandsatzes (12) zu priorisieren, wenn bestimmt ist, dass die aktuelle Höhe unterhalb des Höhengrenzwertes liegt.

3. Drahtloses Kommunikationssystem nach irgendeinem der voranstehenden Ansprüche, wobei der erste Frequenzbandsatz (11) Frequenzbänder unterhalb von 1 GHz umfasst und wobei der zweite Frequenzbandsatz (12) Frequenzbänder oberhalb von 1 GHz umfasst.

4. Drahtloses Kommunikationssystem nach irgendeinem der voranstehenden Ansprüche, wobei der Höhengrenzwert innerhalb des Bereichs von 200 - 5000 Metern und bevorzugt 500 - 3000 m und weiter bevorzugt 500 - 1500 m liegt.

5. Drahtloses Kommunikationssystem nach irgendeinem der voranstehenden Ansprüche, weiterhin umfassend mehrere Antennen (2) und wobei der Router (3) weiterhin mehrere Modems (9) zur Kommunikation mit dem externen stationären Kommunikationsserver umfasst, wobei jedes Modem (9) wenigstens einer Antenne (2) zugeordnet und daran angeschlossen ist;
wobei jedes Modem (9) weiterhin einem spezifischen Frequenzband zugeordnet ist, das aus mehreren Frequenzbändern ausgewählt ist; und
wobei die Steuereinheit (8) ausgestaltet ist, um die drahtlose Kommunikation auf dem wenigstens einen Frequenzband durch Deaktivieren wenigstens eines Modems (9) zu deaktivieren, wenn bestimmt ist, dass die aktuelle Höhe oberhalb des Grenzwertes liegt.

6. Drahtloses Kommunikationssystem nach irgendeinem der voranstehenden Ansprüche, wobei der Router (3) wenigstens acht Modems (9) und bevorzugt wenigstens zehn Modems (9) umfasst.

7. Drahtloses Kommunikationssystem nach irgendeinem der voranstehenden Ansprüche, wobei die Höhenbestimmungs-Einheit (7) ausgestaltet ist, um die Höhe des Flugzeugs (10) kontinuierlich zu überwachen und zu bestimmen.

8. Drahtloses Kommunikationssystem nach irgendeinem der voranstehenden Ansprüche, wobei die Höhenbestimmungs-Einheit (7) innerhalb des Routers (3) bereitgestellt ist.

9. Drahtloses Kommunikationssystem nach irgendeinem der voranstehenden Ansprüche, wobei die Höhenbestimmungs-Einheit (7) eine Globale Navigationssatellitensystem-Einheit, GNSS-Einheit, ist.

10. Drahtloses Kommunikationssystem nach irgendeinem der voranstehenden Ansprüche, wobei der Höhengrenzwert ein erster Höhengrenzwert ist; und
wobei die Steuereinheit (8) weiterhin ausgestaltet ist, um die drahtlose Datenkommunikation auf wenigstens einem anderen Frequenzband zu deaktivieren, wenn bestimmt ist, dass die aktuelle Höhe oberhalb des zweiten Höhengrenzwertes, höher als der erste Höhengrenzwert derart liegt, dass die Datenkommunikation auf wenigstens zwei Frequenzbändern deaktiviert ist, wenn bestimmt ist, dass die aktuelle Höhe oberhalb des zweiten Schwellenwertes liegt.

11. Drahtloses Kommunikationssystem nach irgendeinem der voranstehenden Ansprüche, wobei wenigstens einer der Höhengrenzwerte dynamisch anpassbar und bevorzugt in Abhängigkeit von einer Signal- und/oder Verbindungsqualität anpassbar ist.

12. Verfahren zur drahtlosen Kommunikation zwischen einem drahtlosen Kommunikationssystem (1) in einem Flugzeug (10) und einem stationären Kommunikationsserver außerhalb des Flugzeugs, wobei das Verfahren umfasst:
Bereitstellen eines Routers (3) innerhalb des Flugzeugs (10), wobei der Router (3) an wenigstens eine Antenne (2) angeschlossen und ausgestaltet ist, um eine drahtlose Datenkommunikation von und zu einem stationären Kommunikationsserver außerhalb des Flugzeugs (10) durch wenigstens eine Boden-Basisstation (6) über die wenigstens eine Antenne (2) zu übertragen und zu empfangen, wobei der Router ausgestaltet ist, um eine drahtlose Datenkommunikation auf mehreren unterschiedlichen Frequenzbändern zu übertragen und zu empfangen;
Bestimmen einer aktuellen Höhe des Flugzeugs (10); und
Deaktivieren einer drahtlosen Datenkommunikation auf wenigstens einem Frequenzband aus mehreren unterschiedlichen Frequenzbändern, wenn bestimmt ist, dass die aktuelle Höhe oberhalb eines Höhengrenzwertes liegt;
Bilden eines ersten Frequenzband-Teilsatzes (11) aus den mehreren unterschiedlichen Frequenzbändern;
Bilden eines zweiten Frequenzband-Teilsatzes (12) aus den mehreren unterschiedlichen Frequenzbändern, **dadurch gekennzeichnet, dass** jedes Frequenzband in dem zweiten Frequenzband-Teilsatz (12) eine höhere Frequenz aufweist als jedes Frequenzband in dem ersten Frequenzband-Teilsatz (11); und
wobei der Deaktivierungsschritt der drahtlosen Datenkommunikation das Deaktivieren der drahtlosen Datenkommunikation auf dem zweiten Frequenzband-Teilsatz (12) umfasst, wenn bestimmt ist, dass die aktuelle Höhe oberhalb des Höhengrenzwertes liegt.

## Revendications

1. Système de communication sans fil (1) pour un aéronef (10), ledit système de communication sans fil comprenant :
au moins une antenne (2) ;
un routeur (3) connecté à ladite au moins une antenne (2), dans lequel le routeur est configuré pour transmettre et recevoir une communication de données sans fil vers et depuis un serveur de communication fixe à l'extérieur dudit aéronef par l'intermédiaire d'au moins une station de base au sol (6) via ladite au moins une antenne (2), dans lequel le routeur (3) est configuré pour transmettre et recevoir une communication de données sans fil sur une pluralité de bandes de fréquences différentes ;
une unité de détermination d'altitude (7) configurée pour déterminer une altitude actuelle dudit aéronef ; et
dans lequel ledit routeur (3) comprend une unité de commande (8) connectée opérationnellement à ladite unité de détermination d'altitude (7), ladite unité de commande (8) étant configurée pour désactiver la communication de données sans fil sur au moins une bande de fréquence lorsque l'altitude actuelle est déterminée comme étant supérieure à une valeur seuil d'altitude,
dans lequel ladite pluralité de bandes de fréquences différentes comprend :
un premier ensemble de bandes de fréquences (11) et un deuxième ensemble de bandes de fréquences (12), **caractérisé en ce que** chaque bande de fréquence dans ledit deuxième ensemble de bandes de fréquence est à une fréquence plus élevée que chaque bande de fréquence dans ledit premier ensemble de bandes de fréquence (11); et
**en ce que** ladite unité de commande (8) est configurée pour désactiver ladite communication de données sans fil sur ledit deuxième ensemble de bandes de fréquences (12), et ainsi restreindre ladite communication de données sans fil uniquement audit premier ensemble de bandes de fréquences (11), lorsqu'il est déterminé que l'altitude actuelle est supérieure à la valeur seuil d'altitude.

2. Système de communication sans fil selon la revendication 1, dans lequel ladite unité de commande (8) est en outre configurée pour donner la priorité à une sélection dudit deuxième ensemble de bandes de fréquences (12) lorsqu'il est déterminé que l'altitude actuelle est inférieure à ladite valeur seuil d'altitude.

3. Système de communication sans fil selon une quelconque des revendications précédentes, dans lequel ledit premier ensemble de bandes de fréquences (11) comprend des bandes de fréquences inférieures à 1 GHz et dans lequel ledit deuxième ensemble de bandes de fréquences (12) comprend des bandes de fréquences supérieures à 1 GHz.

4. Système de communication sans fil selon une quelconque des revendications précédentes, dans lequel ladite valeur seuil d'altitude se situe dans la plage de 200-5000 mètres, et de préférence de 500-3000 m et le plus préférablement de 500-1500 m.

5. Système de communication sans fil selon une quelconque des revendications précédentes, comprenant en outre une pluralité d'antennes (2), et dans lequel le routeur (3) comprend en outre une pluralité de modems (9) pour communiquer avec ledit serveur de communication fixe externe, chaque modem (9) étant associé et connecté à au moins une antenne (2) ;
dans lequel chaque modem (9) est en outre associé à une bande de fréquence spécifique sélectionnée parmi la pluralité de bandes de fréquence; et
dans lequel ladite unité de commande (8) est configurée pour désactiver une communication sans fil sur ladite au moins une bande de fréquences lorsque l'altitude actuelle est déterminée comme étant supérieure à ladite valeur seuil, en désactivant au moins un modem (9).

6. Système de communication sans fil selon une quelconque des revendications précédentes, dans lequel le routeur (3) comprend au moins huit modems (9), et de préférence au moins dix modems (9).

7. Système de communication sans fil selon une quelconque des revendications précédentes, dans lequel ladite unité de détermination d'altitude (7) est configurée pour surveiller et déterminer en continu l'altitude dudit aéronef (10).

8. Système de communication sans fil selon une quelconque des revendications précédentes, dans lequel ladite unité de détermination d'altitude (7) est prévue à l'intérieur du routeur (3).

9. Système de communication sans fil selon une quelconque des revendications précédentes, dans lequel ladite unité de détermination d'altitude (7) est une unité GNSS, système mondial de navigation par satellite.

10. Système de communication sans fil selon une quelconque des revendications précédentes, dans lequel ladite valeur seuil d'altitude est une première valeur seuil d'altitude ; et
dans lequel ladite unité de commande (8) est en outre configurée pour désactiver la communication de données sans fil sur au moins une autre bande de fréquence lorsque l'altitude actuelle est déterminée comme étant supérieure à une deuxième valeur seuil d'altitude, supérieure à ladite première valeur seuil d'altitude, de telle sorte que la communication de données sans fil sur au moins deux bandes de fréquence soit désactivée lorsque l'altitude actuelle est déterminé comme étant supérieure à la deuxième valeur seuil.

11. Système de communication sans fil selon une quelconque des revendications précédentes, dans lequel au moins une des valeurs seuils d'altitude est réglable dynamiquement, et de préférence réglable en fonction de la qualité du signal et/ou de la liaison.

12. Procédé de communication de données sans fil entre un système de communication sans fil (1) dans un aéronef (10) et un serveur de communication fixe à l'extérieur de l'aéronef, ledit procédé comprenant:
la fourniture d'un routeur (3) à l'intérieur de l'avion (10), le routeur (3) étant connecté à au moins une antenne (2) et configuré pour transmettre et recevoir une communication de données sans fil vers et depuis le serveur de communication fixe à l'extérieur de l'avion (10) via au moins une station de base au sol (6) via ladite au moins une antenne (2), dans lequel le routeur est configuré pour transmettre et recevoir une communication de données sans fil sur une pluralité de bandes de fréquences différentes ;
la détermination d'une altitude actuelle de l'aéronef (10); et
la désactivation de la communication de données sans fil sur au moins une bande de fréquences parmi ladite pluralité de bandes de fréquences différentes lorsque l'altitude actuelle est déterminée comme étant supérieure à une valeur seuil d'altitude ;
la formation d'un premier sous-ensemble de bandes de fréquences (11) parmi la pluralité de bandes de fréquences différentes ;
la formation d'un deuxième sous-ensemble de bandes de fréquence (12) parmi la pluralité de bandes de fréquence différentes, **caractérisé en ce que** chaque bande de fréquence dans le deuxième sous-ensemble de bandes de fréquence (12) est d'une fréquence plus élevée que chaque bande de fréquence dans le premier sous-ensemble de bandes de fréquences (11); et
dans lequel l'étape de désactivation de la communication de données sans fil comprend la désactivation de la communication de données sans fil sur le deuxième sous-ensemble de bandes de fréquences (12) lorsqu'il est déterminé que l'altitude actuelle est supérieure à la valeur seuil d'altitude.
